# EUROPÄISCHE PATENTSCHRIFT

(11) **EP 1 656 268 B1**
(45) Veröffentlichungstag und Bekanntmachung des Hinweises auf die Patenterteilung: **31.10.2007**
(21) Anmeldenummer: 04762645.2
(22) Anmeldetag: 11.08.2004
(51) Int. Cl.: B60G 17/015, B60G 7/00, B62D 15/02, G01D 5/14

(54) **KUGELGELENK MIT SCHWENKWINKELSENSOR**
BALL JOINT COMPRISING A PIVOT ANGLE SENSOR
ARTICULATION A ROTULE POURVUE D'UN CAPTEUR D'ANGLE DE PIVOTEMENT

(30) Priorität: 21.08.2003 DE 10338833
(43) Veröffentlichungstag der Anmeldung: 17.05.2006
(73) Patentinhaber: ZF FRIEDRICHSHAFEN AG, 88038 Friedrichshafen (DE)
(72) Erfinder: SPRATTE, Joachim, 49090 Osnabrück (DE)
(86) Internationale Anmeldenummer: PCT/DE2004/001800
(87) Internationale Veröffentlichungsnummer: WO 2005/021296

(56) Entgegenhaltungen:
- WO-A-03/008819
- DE-A- 10 161 671
- DE-C- 19 733 719
- US-A1- 2002 149 565
- US-B1- 6 472 865

## Beschreibung

Die Erfindung betrifft ein Kugelgelenk mit Schwenkwinkelsensor nach dem Oberbegriff des Patentanspruchs 1.

Kugelgelenke der eingangs genannten Art kommen beispielsweise, jedoch keineswegs ausschließlich, am Fahrwerk von Kraftfahrzeugen zum Einsatz. Solche Kugelgelenke mit Schwenkwinkelsensor dienen beispielsweise dazu, die Relativposition verschiedener Fahrwerksteile zueinander oder die Relativposition beispielsweise von Fahrzeugachse und Fahrzeugkarosserie festzustellen bzw. zur Weiterverarbeitung in einem elektronischen System des Fahrzeugs zu messen. Dies ist bei modernen Kraftfahrzeugen beispielsweise für die Fahrdynamikregelung, die automatische Niveauregulierung oder für die dynamische Leuchtweitenregulierung von Scheinwerfersystemen von Bedeutung.

Für solche Systeme ist sowohl eine zuverlässige und exakte Erfassung der Winkelstellung der Kugelgelenke mit hoher Wiederholgenauigkeit, als auch ein schnelles dynamisches Ansprechen des Schwenkwinkelsensors von großer Bedeutung. Darüber hinaus werden gattungsgemäße Kugelgelenke aufgrund ihrer Anordnung im Fahrwerksbereich aber auch äußerst hohen mechanischen Belastungen, beispielsweise durch Vibrationen, sowie ebenso starken Einflüssen durch Umgebungsmedien wie Feuchtigkeit, Sand oder Streusalz ausgesetzt. Dennoch werden anwenderseitig hohe Lebensdauer, Ausfallsicherheit und Wartungsfreiheit bei gleichzeitig geringen Kosten gefordert.

Zur Erfüllung dieser Anforderungen hat es sich bereits bewährt, in derartige Kugelgelenke berührungsfrei arbeitende, insbesondere auf Magnetfeldwirkungen basierende Systeme zur Schwenkwinkelerfassung zu integrieren. Dabei wird zumeist der Gelenkkugel ein Permanentmagnet und dem Gelenkgehäuse ein Magnetfeldsensor, insbesondere vom magnetoresistiven Typ (MR) zugeordnet. Ein MR-Sensor verändert sein Ausgangssignal in Abhängigkeit von der Richtung der ihn durchdringenden Magnetfeldlinien, was ihn zum Einsatz für Kugelgelenke mit Schwenkwinkelerfassung prädestiniert.

Ein derartiges Kugelgelenk ist beispielsweise aus der DE 101 10 738 A1 bekannt. Dieses Kugelgelenk besitzt einen in der Gelenkkugel angeordneten Stabmagneten sowie einen an Gelenkgehäuse befestigten Magnetfeldsensor.

Aufgrund der praktisch bei jedem Fahrzeugtyp unterschiedlichen Anordnung solcher Kugelgelenke mit Schwenkwinkelerfassung oder unterschiedlicher Fahrwerksgeometrien beziehungsweise infolge unterschiedlicher Auslegung elektronischer Steuersysteme wie Leuchtweitenregulierung oder Fahrdynamikregelung ist es jedoch in den meisten Fällen erforderlich, derartige Kugelgelenke fahrzeug- bzw. anwendungsspezifisch zu konstruieren und auszulegen. Dies liegt darin begründet, dass zur Erzielung der höchstmöglichen Winkelerfassungsgenauigkeit der gesamte Messbereich des Magnetfeldsensors ausgenutzt werden sollte. Diese Ausnutzung des gesamten Messbereichs des Magnetfeldsensors sollte jedoch unabhängig von der Größe des am Kugelgelenk maximal auftretenden Schwenkwinkels bzw. Nennschwenkwinkels gewährleistet sein.

Das bedeutet mit anderen Worten, dass nach dem Stand der Technik praktisch für jede Anwendung die Kombination aus Gelenkkugel, Permanentmagnet, und insbesondere der Magnetfeldsensor eigens speziell so dimensioniert werden muss, dass beim Durchlaufen des Nennschwenkwinkels des Kugelgelenks gerade eine so große Änderung des den Magnetfeldsensor durchdringenden Magnetfelds erzielt wird, dass mit dem Durchlaufen des Nennschwenkwinkels ein möglichst großer Teil des Messbereichs des Magnetfeldsensors ausgenutzt wird.

Eine derartige anwendungsspezifische Auslegung sämtlicher die Winkelerfassung bestimmenden Bauteile eines derartigen Kugelgelenks ist jedoch aufwändig und teuer. Dies gilt insbesondere für die jeweils erforderliche Anpassung der Platzierung, Größe, Empfindlichkeit und räumlichen Unterbringung des jeweiligen Magnetfeldsensors am Gelenkgehäuse.

Darüber hinaus offenbart die DE 197 33 719 C1 ein Kugelgelenk mit einem Winkelsensor zur Ermittlung der Relativstellung von Gelenkgehäuse und Kugelzapfen, mit einem in einer Ausnehmung der Gelenkkugel eingebetteten Magneten. Der Magnet ist hierzu in einem Kunststoffteil eingebettet, welches im Wesentlichen die gesamte Gelenkkugel bzw. den gesamten Zapfen des Kugelgelenks durchdringt. Ferner wird durch die dort offenbarte Lösung lediglich eine Verdrehung des Kugelzapfens in dem Gelenkgehäuse um die Kugelzapfenlängsachse gemessen. Ein Verschwenken der Kugelzapfenlängsachse um eine Achse senkrecht zur Kugelzapfenachse ist durch die konstruktive Ausbildung des Kugelgelenks nicht oder kaum möglich und deshalb auch nicht sensierbar. Eine Anpassung des Winkelerfassungssystems an verschiedene geometrische Anforderungen und Einbaubedingungen ist nicht vorgesehen.

Vor diesem Hintergrund ist es die Aufgabe der vorliegenden Erfindung, ein Kugelgelenk mit Schwenkwinkelerfassung zu schaffen, bei dem die genannten Nachteile überwunden werden, und bei dem insbesondere der Aufwand für die Anpassung des Winkelerfassungssystems entscheidend reduziert werden kann. Auf diese Weise sollen raschere Entwicklungszeiten erzielt und darüber hinaus die Entwicklungs-, Produktionssowie Einkaufs- und Lagerhaltungskosten verringert werden.

Diese Aufgabe wird durch ein Kugelgelenk mit den Merkmalen des Patentanspruchs 1 gelöst.

Bevorzugte Ausführungsformen sind Gegenstand der Unteransprüche.

Ein Kugelgelenk gemäß der vorliegenden Erfindung weist in an sich zunächst bekannter Weise einen Schwenkwinkelsensor zur Ermittlung der Relativwinkelstellung zwischen Gelenkgehäuse und Kugelzapfen bzw. Gelenkkugel auf. Dabei wird zur Erfassung des Schwenkwinkels zunächst eine bekannte Kombination aus einem in die Gelenkkugel eingebetteten Magneten und einem an Gelenkgehäuse angeordneten Magnetfeldsensor eingesetzt.

Erfindungsgemäß zeichnet sich das Kugelgelenk auch dadurch aus, dass anwendungsspezifisch für jeden Kugelgelenktyp auch innerhalb einer Serie von Kugelgelenken die Position und die Größe des Magneten, sowie die Position und die Größe der den Magneten aufnehmenden Ausnehmung in der Gelenkkugel so gewählt sind, dass beim Erreichen des Nenn-Schwenkwinkels αₘ des jeweiligen Kugelgelenks der Winkel κ der den Magnetfeldsensor durchdringenden Magnetfeldlinien annähernd mit einer für die gesamte Serie geltenden Konstante κₘ übereinstimmt.

Mit anderen Worten bedeutet dies, dass erfindungsgemäß lediglich mittels entsprechender Gestaltung der Gelenkkugel bzw. des die Gelenkkugel tragenden Kugelzapfens, sowie ebenfalls durch entsprechende Gestaltung und Anordnung des an der Gelenkkugel angeordneten Magneten, Einfluss auf Form, Stärke und Ausdehnung des Magnet und Gelenkkugel umgebenden Magnetfeldes genommen wird dergestalt, dass beim Durchlaufen des Nennschwenkwinkels des Kugelgelenks typunabhängig gerade der gesamte zur Verfügung stehende Messbereich des Magnetfeldsensors ausgenutzt wird.

Dies ist überaus vorteilhaft, da nun typübergreifend beispielsweise innerhalb einer Kugelgelenkserie im Wesentlichen ein und derselbe Magnetfeldsensor verwendet werden kann, der darüber hinaus auch noch typübergreifend in ein und demselben Sensorgehäuse sowie an ein und derselben Stelle am Kugelgelenk angeordnet sein kann. Es ist ohne weiteres ersichtlich, dass hieraus ganz beträchtliche Kosteneinsparungen in Entwicklung, Einkauf, Lagerhaltung, Produktion und Logistik, sowie eine erhebliche Verkürzung der Reaktionszeiten auf geänderte Kundenanforderungen resultieren.

Besonders bevorzugt entspricht dabei die Konstante κₘ im Wesentlichen dem maximal vom Magnetfeldsensor erfassbaren Magnetfeldwinkel. Auf diese Weise lässt sich am Magnetfeldsensor ein Messsignal mit größtmöglicher Auflösung und Wiederholgenauigkeit in Bezug auf den Schwenkwinkel des Kugelgelenks abgreifen.

Für die Erfindung ist es dabei unerheblich, welches magnetische Wirkprinzip und welche Form und Anordnung der Kombination aus Gelenkkugel und Magnet verwendet wird, solange der Magnetfeldsensor dadurch mit der erforderlichen Magnetfeldänderung beim Verschwenken des Kugelgelenks um dessen Nennwinkel versorgt werden kann.

Gemäß einer bevorzugten Ausführungsform der Erfindung jedoch kommt als Magnet ein einfacher Stabmagnet zum Einsatz, dessen magnetische Achse bevorzugt mit der Achse des Kugelzapfens übereinstimmt. Eine derartige Ausgestaltung ist insbesondere konstruktiv einfach sowie kostengünstig, und führt darüber hinaus zu einer zuverlässigen Winkelerfassung, die von einer im Betrieb des Kugelgelenks eventuell auftretenden Rotation des Kugelzapfens um seine eigene Achse unbeeinflusst bleibt. Besonders bevorzugt ist dabei der Magnet in demjenigen Polbereich der Gelenkkugel angeordnet, der dem Kugelzapfen gegenüber liegt.

Gemäß einer weiteren bevorzugten Ausführungsform der Erfindung ist der Magnetfeldsensor im Bereich der dem Kugelzapfen abgewandten Öffnung des Gelenkgehäuses bzw. im Bereich eines dort befindlichen Verschlussdeckels angeordnet. Besonders bevorzugt fällt dabei die magnetische Symmetrieachse des Magnetfeldsensors mit der Symmetrieachse des Gelenkgehäuses bzw. mit der Achse des Kugelzapfens, in dessen Neutralstellung, zusammen.

Dies ist vorteilhaft, ebenso wie die vorbeschriebene bevorzugte Anordnung des Magneten, im Sinne eines einfachen Aufbaus des Kugelgelenks, sowie für die zuverlässige Ermittlung des Schwenkwinkels, unabhängig von einer eventuellen Rotation des Kugelzapfens im Gelenkgehäuse. Dabei ist der Magnetfeldsensor bevorzugt in einem Kunststoffelement angeordnet bzw. in ein Kunststoffelement eingebettet. Dabei kann das Kunststoffelement besonders bevorzugt gleichzeitig die Funktion des Verschlussdeckels für das Gelenkgehäuse auf der dem Kugelzapfen gegenüberliegenden Seite des Gelenkgehäuses übernehmen, was wiederum der konstruktiven Vereinfachung sowie einer dementsprechenden Kostenersparnis sowie Erhöhung der Zuverlässigkeit des Kugelgelenks dient.

Es ist für das Wesen der Erfindung nicht bestimmend, auf welche Weise der Magnet mit der Gelenkkugel verbunden bzw. der Magnet in die Gelenkkugel eingebettet wird. Auch die Formgebung des Magneten ist erfindungsunwesentlich, solange sich damit die gewünschte Verteilung der Magnetfeldlinien im Bereich des Magnetfeldsensors erzielen lässt. Bevorzugt geschieht die Einbettung des Magneten in die Gelenkkugel jedoch mittels eines elastischen Hilfskörpers, welcher gemäß einer besonders bevorzugten Ausführungsform der Erfindung aus einem Elastomerwerkstoff oder aus Kunststoff besteht.

Ebenfalls gemäß einer bevorzugten Ausführungsform der Erfindung besitzt der Magnet eine im Wesentlichen stabförmig zylindrische Form und der den Magneten in die Ausnehmung der Gelenkkugel einbettende Hilfskörper eine im Wesentlichen zylinderringförmige Gestalt.

Dies bedeutet mit anderen Worten, dass zur Verbindung von Magnet und Gelenkkugel die Gelenkkugel lediglich eine im wesentlichen zylindrische Ausnehmung erhält, in welche der bevorzugt aus Kunststoff bestehende, ringförmige Hilfskörper eingelegt bzw. eingepresst wird, wonach in die Ausnehmung des Hilfskörpers wiederum der Magnet eingelegt, eingepresst oder eingeklebt wird.

Der elastische Hilfskörper kann gemäß einer weiteren Ausführungsform der Erfindung ferner auch als eine im wesentlichen ringförmige Feder, bestehend aus bevorzugt nicht ferromagnetischem Material, ausgebildet sein, wobei die ringförmige Feder nach einer weiteren Ausführungsform außerdem zumindest bereichsweise mit Kunststoffmaterial zur Aufnahme des Magneten umspritzt sein kann. Auf diese Weise lässt sich der Magnet einerseits besonders einfach montieren, andererseits wird mit einer ringförmigen Feder, insbesondere mit einer kunststoffumspritzten Feder, eine besonders vibrationsfeste Verankerung des Magneten in der Gelenkkugel erreicht.

Die Einbettung des Magneten in die Gelenkkugel mittels eines im wesentlichen zylinderringförmigen oder ringförmigen Hilfskörpers bzw. mit einer im wesentlichen ringförmigen Feder ist insbesondere dahingehend vorteilhaft, als auf diese Weise die Position und Größe des Magneten sowie die Position und Größe der Ausnehmung in der Gelenkkugel, von denen Gestalt, Stärke und Ausdehnung des Magnetfeldes maßgeblich abhängen, besonders einfach sowie zudem unabhängig voneinander optimiert werden können, so dass genau das für die maximale Auflösung des Schwenkwinkelsensors erforderliche charakteristische Magnetfeld entsteht.

Im Folgenden wird die Erfindung anhand lediglich Ausführungsbeispiele darstellender Zeichnungen näher erläutert.

Es zeigt:
- **Fig. 1**: in teilweise g eschnittener Seitenansicht ein Ausführungsbeispiel für ein Kugelgelenk zur Schwenkwinkelerfassung;
- **Fig. 2**: in schematischer D arstellung einen Längsschnitt durch Gelenkkugel und Magnet des Kugelgelenks gemäß **Fig. 1**;
- **Fig. 3**: in schematischer D arstellung den Längsschnitt gemäß **Fig. 2** sowie die Verteilung der Magnetfeldlinien;
- **Fig. 4**: in Diagr ammdarstellung den gemäß **Fig. 2** auftretenden Verlauf des Feldlinienwinkels κ aufgetragen über dem Schwenkwinkel a der Gelenkkugel;
- **Fig. 5**: in einer **Fig. 3** entsprechenden Darstellung Längsschnitt und Feldlinienverteilung der Gelenkkugel eines weiteren Kugelgelenks;
- **Fig. 6**: in ein er **Fig. 4** entsprechenden Darstellung den Feldlinienwinkel κ über dem Schwenkwinkel a der Gelenkkugel gemäß **Fig. 5**;
- **Fig. 7**: in schematischer D arstellung den Längsschnitt durch Gelenkkugel und Magnet einer weiteren Ausführungsform eines Kugelgelenks;
- **Fig. 8**: in einer **Fig. 7** entsprechenden Darstellung die Gelenkkugel gemäß **Fig. 7** in Untersicht;
- **Fig. 9**: in einer **Fig. 7** und **8** entsprechenden Darstellung den Längsschnitt durch Gelenkkugel und Magnet einer weiteren Ausführungsform eines Kugelgelenks; und
- **Fig. 10**: in einer **Fig. 7** bis **9** entsprechenden Darstellung die Gelenkkugel gemäß **Fig. 9** in Untersicht.

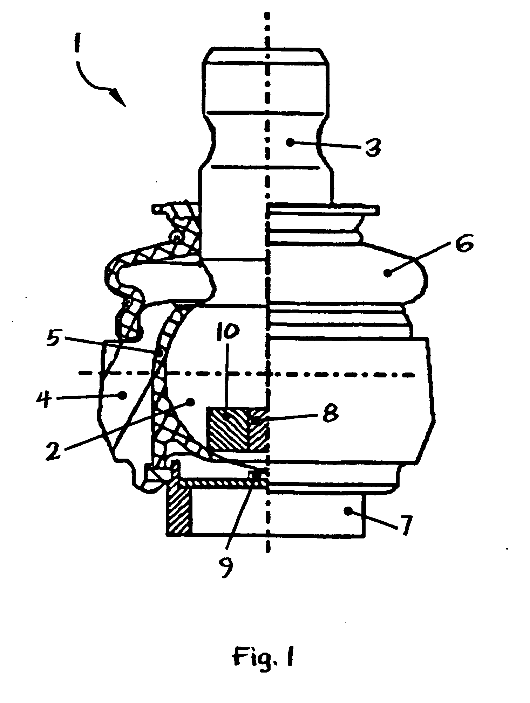

In **Fig. 1** ist in teilweise längsgeschnittener Darstellung ein Kugelgelenk 1 dargestellt. Das Kugelgelenk 1 setzt sich im Wesentlichen aus dem die Gelenkkugel 2 umfassenden Kugelzapfen 3 und dem Gelenkgehäuse 4 mit der darin eingesetzten Lagerschale 5 zusammen. Ferner umfasst das Kugelgelenk 1 noch einen Elastomerbalg 6 und einen Gehäusedeckel 7, die dem Schutz von Gelenkkugel 2 und Lagerschale 5 vor dem Eindringen von Schmutz und Feuchtigkeit dienen.

Darüber hinaus ist das Kugelgelenk 1 jedoch auch mit einer Einrichtung zur Feststellung der Schwenkwinkelposition des Kugelzapfens 3 gegenüber dem Gelenkgehäuse 4 versehen. Diese Winkelmesseinrichtung umfasst einerseits einen Permanentmagneten 8, der im zapfenabgewandten Polbereich der Gelenkkugel 2 in einer dort vorhandenen Ausnehmung der Gelenkkugel 2 angeordnet ist. Zum anderen umfasst die Winkelmesseinrichtung einen Magnetfeldsensor 9, der auf der dem Gelenkgehäuse 4 zugewandten Innenseite des Gehäusedeckels 7 angeordnet ist.

Bei dem Magnetfeldsensor 9 handelt es sich bei den gezeigten Ausführungsbeispielen um einen sogenannten magnetoresistiven Sensor (MR-Sensor), der sich dadurch auszeichnet, dass sein Ausgangssignal ein unmittelbares Maß für den Winkel der den Sensor durchdringenden Magnetfeldlinien darstellt.

In **Fig. 1** ist ferner der ebenfalls im Polbereich der Gelenkkugel 2 in der dortigen Ausnehmung angeordnete Kunststoffring 10 erkennbar, der der Einbettung des Permanentmagneten 8 in die Gelenkkugel 2 dient. Bereits hieraus wird erkennbar, dass die Charakteristik des Magnetfeldes des Magneten 8 durch Auswahl eines Magneten 8 von bestimmter Größe und Stärke sowie durch die dementsprechende Gestaltung sowie gegebenenfalls Materialwahl des Kunststoffring 10 bereits in weiten Grenzen verändert werden kann, ohne dass weitere Änderungen irgendeiner Art am Kugelgelenk selbst vorgenommen werden müssten.

Außer dem Magneten 8 selbst mit seinen für das Magnetfeld bestimmenden Eigenschaften wie Größe und Stärke des Magneten 8, kann der Kunststoffring 10 neben der reinen Befestigungsfunktion für den Magneten 8 in der Gelenkkugel 2 selbst auch als aktiv magnetfeldbeeinflussendes Bauteil herangezogen werden. Dies kann beispielsweise dadurch geschehen, dass für den Kunststoffrings 10 ein Material gewählt wird, das nicht magnetisch inert ist, sondern den Verlauf der Magnetfeldlinien beeinflusst. Darüber hinaus ist es auch möglich, den Magneten 8 ebenfalls aus einem Kunststoffmaterial herzustellen, wobei zur Herstellung des Magneten 8 dann ein magnetisierbares Kunststoffmaterial verwendet wird. Auf diese Weise können Magnet 8 und Kunststoffring 10 sogar zu einem einzigen, beispielsweise durch Koextrusion herstellbaren Bauteil verschmolzen werden.

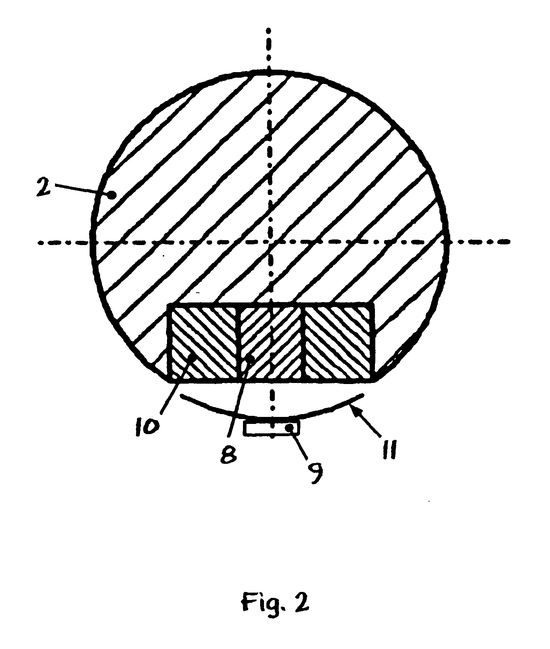

In **Fig. 2** ist der besseren Übersichtlichkeit halber lediglich die Gelenkkugel 2 des Kugelgelenks 1 gemäß **Fig. 1** nochmals dargestellt. Man erkennt den im zeichnungsbezogen unteren Polbereich der Gelenkkugel 2 in einer dort vorhandenen zylindrische Ausnehmung angeordneten Kunststoffring 10 und den im Kunststoffring 10 mittig eingebetteten Permanentmagneten 8, sowie den Magnetfeldsensor 9. Beim Verschwenken der Gelenkkugel 2 gegenüber dem hier nicht dargestellten Gelenkgehäuse 4, mit welchem der Magnetfeldsensor 9 über den in **Fig. 2** ebenfalls nicht dargestellten Gehäusedeckel 7 verbunden ist, wandert der Magnetfeldsensor 9 gegenüber der Gelenkkugel 2 entlang dem Bogensegment 11, wobei sich die Richtung der den Magnetfeldsensor 9 durchdringenden Feldlinien des Magneten 8 in Abhängigkeit des Schwenkwinkels der Gelenkkugel 2, und damit das Ausgangssignal des Magnetsensors 9 entsprechend ändern.

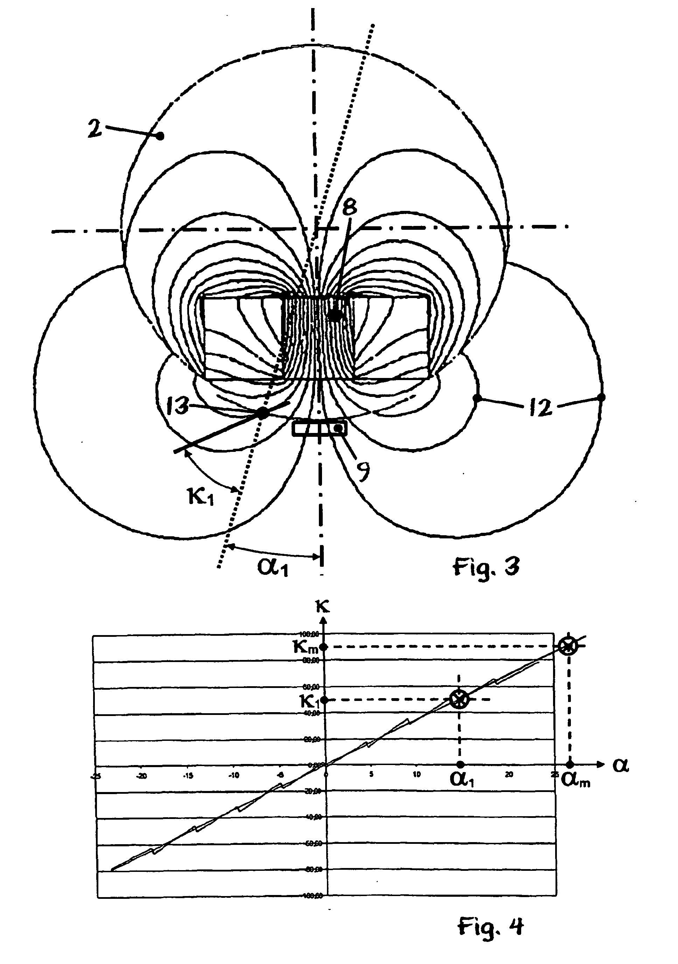

In **Fig. 3** ist die Gelenkkugel 2 und der Magnetfeldsensor 9 gemäß **Fig. 2** erneut, diesmal lediglich schematisch, dargestellt. Außerdem zeigt **Fig. 3** die Verteilung der Magnetfeldlinien 12 des in der Gelenkkugel 2 angeordneten Magneten 8. Der mit α bezeichnete Winkel beschreibt beispielhaft die Größe einer Verschwenkung der Gelenkkugel 2 gegenüber dem Gelenkgehäuse 4, wohingegen κ den Winkel der dann den Magnetfeldsensor 9 durchdringenden Magnetfeldlinien bezeichnet. Bezogen auf die Darstellung der **Fig. 3** bedeutet dies, dass beispielsweise bei einer Verschwenkung der Gelenkkugel 2 um den Winkel α₁ die Feldlinien des Magneten 8 den relativ zur Gelenkkugel 2 dann bei Bezugsziffer 13 befindlichen Magnetfeldsensor 9 mit den Winkel κ₁ durchdringen, was zu einem dem Winkel κ₁ entsprechenden Ausgangssignal des Magnetfeldsensors 9 führt.

In **Fig. 4** ist der Winkel κ bzw. das dementsprechende Ausgangssignal des Magnetfeldsensors 9 über dem Schwenkwinkel α der Gelenkkugel 2 aufgetragen. Man erkennt die praktisch lineare Korrelation zwischen dem vom Magnetfeldsensor 9 gelieferten Winkelsignal und dem entsprechenden Schwenkwinkel der Gelenkkugel 2, was einer genauen sowie möglichst hochauflösenden Bestimmung des Schwenkwinkels der Gelenkkugel 2 relativ zum Gelenkgehäuse 4 sehr förderlich ist.

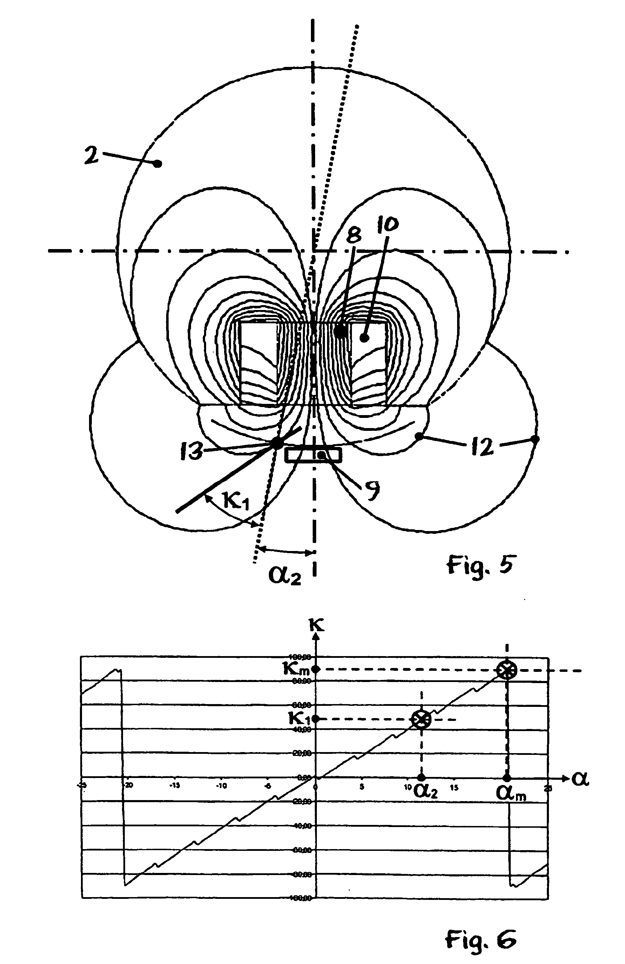

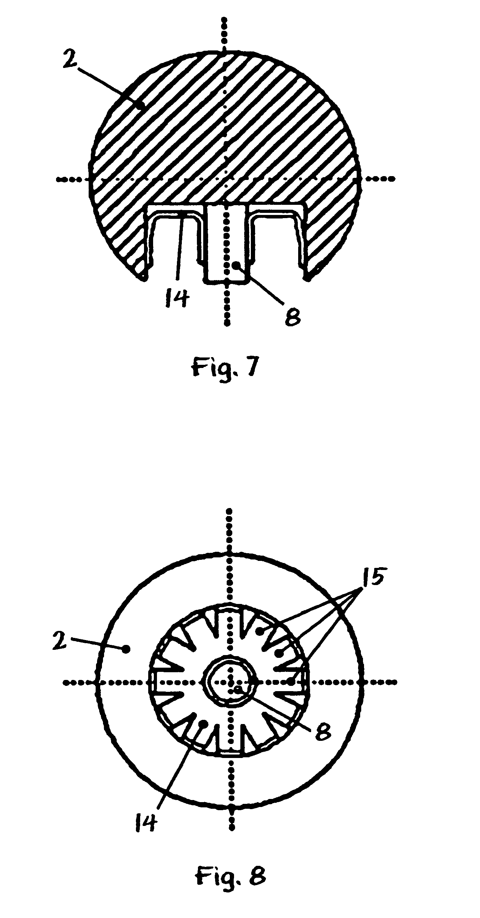

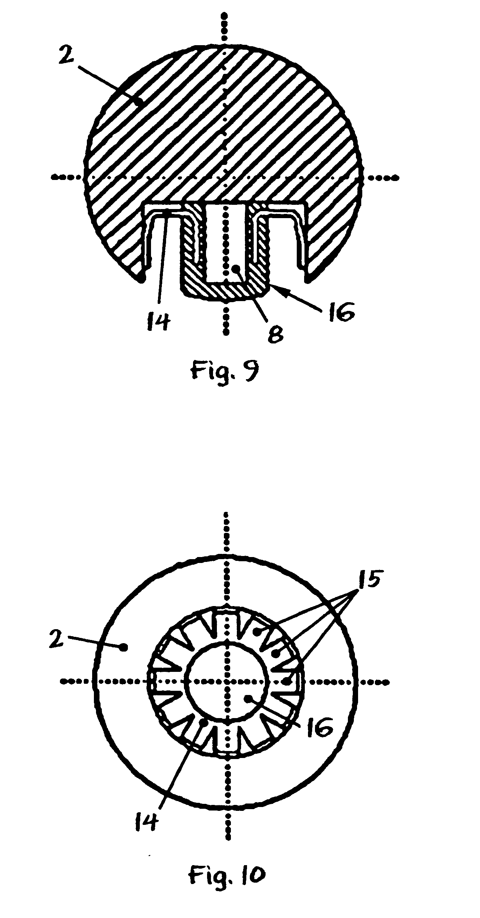

In **Fig. 5** ist die Gelenkkugel 2 eines weiteren Kugelgelenks 1 sowie die entsprechende Verteilung der Magnetfeldlinien 12 wiederum schematisch dargestellt. Die in **Fig. 5** dargestellte Gelenkkugel 2 besitzt jedoch gegenüber der Gelenkkugel gemäß **Fig. 3** eine Magnetausnehmung mit geringerem Durchmesser. Der kleinere Durchmesser der Magnetausnehmung der Gelenkkugel 2 wird gemäß **Fig. 5** dadurch ausgeglichen, dass ein Kunststoffring 10 mit kleinerem Außendurchmesser verwendet wird, wobei der Magnet 8 gemäß **Fig. 5** die gleiche Größe wie der Magnet 8 gemäß **Fig. 3** aufweist.
Lediglich die geänderten Abmessungen der Magnet 8 sowie Kunststoffring 10 enthaltenden Ausnehmung der Gelenkkugel 2 führen jedoch bereits zu einer beträchtlichen Veränderung der Gestalt des Magnetfeldes und der Verteilung der Magnetfeldlinien 12, wie ein Vergleich der **Fig. 3** und **5** erkennen lässt. Damit verbunden ist jedoch auch eine entsprechende Veränderung der Reaktion des Magnetfeldsensors 9 auf Schwenkbewegungen der Gelenkkugel 2 im Gelenkgehäuse 4.

Dies wird anhand Zusammenschau von **Fig. 5** und **Fig. 3** deutlich. Mit κ₁ ist sowohl in **Fig. 3** als auch in **Fig. 5** der Winkel der den Magnetfeldsensor 9 bei Bezugsziffer 13 durchdringenden Magnetfeldlinien 12 bezeichnet. Dabei ist der Winkel κ₁, und damit auch das Ausgangssignal des Magnetfeldsensors 9, sowohl in **Fig. 3** als auch in **Fig. 5** gleich groß. Aufgrund des gegenüber **Fig. 3** unterschiedlich geformten Magnetfelds gemäß **Fig. 5**, das insbesondere enger beieinander liegende Magnetfeldlinien aufweist, liegt diejenige Stelle 13 bzw. diejenige Relativ-Winkelposition von Gelenkkugel 2 und Gelenkgehäuse 4, an der die Magnetfeldlinien 12 den Magnetfeldsensor 9 gerade mit dem Winkel κ₁ durchdringen, bei der Kugel gemäß **Fig. 5** jedoch deutlich näher bei der Neutral- bzw. Mittelstellung der Gelenkkugel 2 als in **Fig. 3**.

Mit anderen Worten bedeutet dies, dass Feldlinienwinkel κ₁ bzw. das entsprechende Ausgangssignal des Magnetfeldsensors 9 gemäß **Fig. 5** bereits bei einer geringeren Auslenkung der Gelenkkugel 2 von der Größe α₂ auftritt, während der gleichgroße Feldlinienwinkel κ₁ bzw. ein gleichgroßes Ausgangssignal des Magnetfeldsensors 9 bei der Anordnung gemäß **Fig. 3** erst bei einer größeren Auslenkung α₁ der Gelenkkugel 2 auftritt.

Dieser Zusammenhang wird nochmals verdeutlicht durch einen Vergleich der Diagrammdarstellungen gemäß **Fig. 4** und **Fig. 6**, wobei das Diagramm gemäß **Fig. 4** der Anordnung gemäß **Fig. 3** und das Diagramm gemäß **Fig. 6** der Anordnung gemäß **Fig. 5** zugeordnet ist. Anhand des Vergleichs der Diagramme der **Fig. 4** bzw. **6** erkennt man, dass das Ausgangssignal κ₁ bei der Anordnung gemäß **Fig. 3** erst bei einem Schwenkwinkel der Gelenkkugel 2 von etwa α₁ = 15° erreicht wird, während ein gleichgroßes Ausgangssignal κ₁ bei der Anordnung gemäß **Fig. 5** bereits bei einer Auslenkung der Gelenkkugel um etwa α₂ = 12° erreicht wird. Ebenso wird das maximale Ausgangssignal κₘ, das bei der gezeigten Ausführungsform einem Feldlinienwinkel von etwa 90° entspricht, bei der Anordnung gemäß **Fig. 3** erst beim Verschwenken der Gelenkkugel 2 um etwa αₘ = 27° erreicht, während das gleichgroße maximale Ausgangssignal κₘ bei der Anordnung gemäß **Fig. 5** bereits bei einer Auslenkung der Gelenkkugel um etwa αₘ = 21 ° erreicht wird. Dies bedeutet mit anderen Worten, dass ein mit der erfindungsgemäßen Gestaltung der Gelenkkugel 2 sowie des Magneten 8 und ggf. des Kunststoffringes 10 ausgestattetes Kugelgelenk 1 typübergreifend innerhalb einer Serie von Kugelgelenken mit ein und demselben Magnetfeldsensor 9 und mit ein und demselben Sensorgehäuse 7 auskommen kann, wobei der Magnetfeldsensor 9 bei jedem Kugelgelenkstyp der Kugelgelenkserie zudem auch an ein und derselben Stelle angeordnet werden kann. Erfindungsgemäß wird dabei lediglich durch Anpassung von Position und Größe des Magneten 8 sowie Position und Größe der Ausnehmung in der Gelenkkugel 2, sowie gegebenenfalls Größe und Ausführung des Kunststoffrings 7, sichergestellt, dass bei jedem Kugelgelenk 1 der Kugelgelenkserie bei einer Verschwenkung um den jeweiligen Nenn-Schwenkwinkel des Kugelgelenks 1 die gesamte zur Verfügung stehende Signalbreite des innerhalb der gesamten Serie unverändert eingesetzten Magnetfeldsensors 9 ausgenutzt wird.

In den **Fig. 7** bis **10** sind die Gelenkkugeln zweier weiterer Ausführungsformen von Kugelgelenken 1 dargestellt. In **Fig. 7** erkennt man neben der längsgeschnittenen Gelenkkugel 2 und dem Magneten 8 einen ringförmigen Hilfskörper 14, der bei dieser Ausführungsform des Kugelgelenks 1 als im Wesentlichen ringförmige Feder 14 ausgebildet ist, wobei die zur Verankerung des Magneten 8 in der zylindrischen Ausnehmung der Gelenkkugel 2 dienenden ringförmige Feder 14 vorzugsweise aus nicht ferromagnetischem Material gefertigt wird, um das Magnetfeld nicht zu beeinflussen oder zu schwächen.

**Fig. 8** zeigt die Gelenkkugel 2 gemäß **Fig. 7** in der Untersicht. Man erkennt neben dem zentrisch angeordneten Magneten 8 insbesondere die beispielsweise durch Stanzen erzeugte Gestalt der ringförmigen Feder 14, die sich mit einer Anzahl zungenartiger Federnasen 15 am Außenrand der zylindrischen Ausnehmung der Gelenkkugel 2 abstützt.

In **Fig. 9** ist die Gelenkkugel 2 einer weiteren Ausführungsform eines Kugelgelenks 1 im Längsschnitt dargestellt. Die dargestellte Gelenkkugel 2 besitzt ebenfalls eine im wesentlichen ringförmige Feder 14 zur Verankerung des Magneten 8 in der zylindrischen Ausnehmung der Gelenkkugel 2. Dabei ist jedoch zusätzlich der den Magneten aufnehmende zentrale Bereich der ringförmigen Feder 14 mit Kunststoffmaterial 16 umspritzt. Dies dient einer noch besseren Verankerung des Magneten 8 in der zylindrischen Ausnehmung der Gelenkkugel 2, insbesondere gegenüber in Betrieb des Kugelgelenks 1 auftretenden Vibrationen.

In **Fig. 10** ist schließlich die Gelenkkugel gemäß **Fig. 9** in Untersicht nochmals dargestellt. Neben der ringförmigen Feder 14, die ebenso wie die Feder gemäß **Fig. 8** eine Anzahl Federnasen 15 zur Abstützung der Feder 14 in der zylindrischen Ausnehmung der Gelenkkugel 2 besitzt, erkennt man den mit Kunststoffmaterial 16 umspritzten zentralen Bereich der ringförmigen Feder 14, durch den der Magnet 8 in dieser Ansicht verdeckt wird.

Im Ergebnis wird somit deutlich, dass sich dank der Erfindung der konstruktive Aufwand bei der Dimensionierung von Kugelgelenken für die Schwenkwinkelerfassung, insbesondere der Aufwand für die kundenspezifische Dimensionierung und Gestaltung solcher Kugelgelenke, ganz erheblich reduzieren lässt, da die kundenspezifische Umkonstruktion des Kugelgelenks erfindungsgemäß auf lediglich die Gelenkkugel und die Magnetanordnung beschränkt werden kann. Art, Ausführung. Anordnung und Position des Magnetfeldsensors hingegen bleiben jeweils unangetastet. Dadurch lassen sich einerseits beträchtliche Kosteneinsparungen erzielen und es wird andererseits die Reaktionszeit auf kundenspezifische Wünsche und Anforderungen entscheidend reduziert.

### Bezugszeichenliste

- 1: Kugelgelenk
- 2: Gelenkkugel
- 3: Kugelzapfen
- 4: Gelenkgehäuse
- 5: Lagerschale
- 6: Elastomerbalg
- 7: Gehäusedeckel
- 8: Permanentmagnet
- 9: Magnetfeldsensor
- 10: Kunststoffring
- 11: Bogensegment
- 12: Magnetfeldlinien
- 13: Sensorkoordinatenpunkt
- 14: Hilfskörper (Feder)
- 15: Federnase
- 16: Kunststoff
- α: Winkel
- κ: Winkel

## Patentansprüche

1. Kugelgelenk (1) mit Schwenkwinkelsensor (9) zur Ermittlung der Relativwinkelstellung von Gelenkgehäuse (4) und Kugelzapfen (3), mit einem in einer Ausnehmung der Gelenkkugel (2) eingebetteten Magneten (8) und einem am Gelenkgehäuse (4) angeordneten Magnetfeldsensor (9),
**dadurch gekennzeichnet,**
**dass** für eine Serie von Kugelgelenken, wo eine Anpassung des Kugelgelenks sich auf Gelenkkugel und Magnetanordnung beschränkt, die Position und Größe des Magneten (8) sowie Position und Größe der Ausnehmung in der Gelenkkugel (2) so gewählt sind, dass beim Erreichen eines Nenn-Schwenkwinkels αₘ des jeweiligen Kugelgelenks (1) der Winkel κ der den Magnetfeldsensor (9) durchdringenden Magnetfeldlinien (12) annähernd mit einer für die gesamte Serie geltenden Konstante κₘ übereinstimmt.

2. Kugelgelenk nach Anspruch 1,
**dadurch gekennzeichnet,**
**dass** die Konstante κₘ dem maximal vom Magnetfeldsensor (9) erfassbaren Magnetfeldwinkel entspricht.

3. **Kugelgelenk nach Anspruch 1 oder 2,**
**dadurch gekennzeichnet,**
**dass** der Magnet (8) ein Stabmagnet ist, dessen magnetische Achse mit der Achse des Kugelzapfens (3) übereinstimmt.

4. Kugelgelenk nach einem der Ansprüche 1 bis 3,
**dadurch gekennzeichnet,**
**dass** der Magnet (8) am Kugelzapfen-abgewandten Polbereich der Gelenkkugel (2) angeordnet ist.

5. Kugelgelenk nach einem der Ansprüche 1 bis 4,
**dadurch gekennzeichnet,**
**dass** der Sensor (9) im Bereich des Verschlussdeckels (7) des Gelenkgehäuses (4) angeordnet ist.

6. Kugelgelenk nach einem der Ansprüche 1 bis 5,
**dadurch gekennzeichnet,**
**dass** die magnetische Symmetrieachse des Sensors (9) mit der Symmetrieachse des Gelenkgehäuses (4) bzw. mit der Symmetrieachse des Kugelzapfens (3) zusammenfällt.

7. Kugelgelenk nach einem der Ansprüche 1 bis 6,
**dadurch gekennzeichnet,**
**dass** der Sensor (9) in einem Kunststoffelement (7) angeordnet bzw. eingebettet ist.

8. Kugelgelenk nach Anspruch 7,
**dadurch gekennzeichnet,**
**dass** das Kunststoffelement (7) die Funktion des Verschlussdeckels für das Gelenkgehäuse (4) übernimmt.

9. Kugelgelenk nach einem der Ansprüche 1 bis 8,
**dadurch gekennzeichnet,**
**dass** die Einbettung und Verankerung des Magneten (8) in der Gelenkkugel (2) mittels eines elastischen Hilfskörpers (10) erfolgt.

10. Kugelgelenk nach Anspruch 9,
**dadurch gekennzeichnet,**
**dass** der elastische Hilfskörper (10) aus einem Polymer besteht.

11. Kugelgelenk nach Anspruch 9 oder 10,
**dadurch gekennzeichnet,**
**dass** der Magnet (8) eine im Wesentlichen zylindrische, und der elastische Hilfskörper (10) eine im Wesentlichen zylinderringförmige Gestalt aufweist.

12. Kugelgelenk nach einem der Ansprüche 9 bis 11,
**dadurch gekennzeichnet,**
**dass** der elastische Hilfskörper (10) als im Wesentlichen ringförmige Feder (14) aus nicht ferromagnetischem Material ausgebildet ist

13. Kugelgelenk nach Anspruch 12,
**dadurch gekennzeichnet,**
**dass** die ringförmige Feder (14) zumindest bereichsweise mit Kunststoffmaterial (16) umspritzt ist.

## Claims

1. Ball joint (1) with a pivoting-angle sensor (9) for ascertaining the relative angular position of the joint housing (4) and ball pin (3), with a magnet (8) which is embedded in a recess in the joint ball (2) and a magnetic-field sensor (9) which is arranged on the joint housing (4),
**characterised in that**,
for a series of ball joints, in which adaptation of the ball joint is limited to the joint ball and the magnet arrangement, the position and size of the magnet (8) and also the position and size of the recess in the joint ball (2) are chosen in such a way that, when a nominal pivoting angle αₘ of the relevant ball joint (1) is reached, the angle K of the magnetic-field lines (12) passing through the magnetic-field sensor (9) approximately corresponds with a constant κₘ which is valid for the entire series.

2. Ball joint according to claim 1,
**characterised in that**
the constant κₘ corresponds to the maximum magnetic-field angle which can be detected by the magnetic-field sensor (9).

3. Ball joint according to claim 1 or 2,
**characterised in that**
the magnet (8) is a bar magnet whose magnetic axis corresponds with the axis of the ball pin (3).

4. Ball joint according to one of claims 1 to 3,
**characterised in that**
the magnet (8) is arranged on that polar region of the joint ball (2) which faces away from the ball pin.

5. Ball joint according to one of claims 1 to 4,
**characterised in that**
the sensor (9) is arranged in the region of the closing cover (7) of the joint housing (4).

6. Ball joint according to one of claims 1 to 5,
**characterised in that**
the magnetic axis of symmetry of the sensor (9) coincides with the axis of symmetry of the joint housing (4) or with the axis of symmetry of the ball pin (3).

7. Ball joint according to one of claims 1 to 6,
**characterised in that**
the sensor (9) is arranged or embedded in a plastic element (7).

8. Ball joint according to claim 7,
**characterised in that**
the plastic element (7) assumes the function of the closing cover for the joint housing (4).

9. Ball joint according to one of claims 1 to 8,
**characterised in that**
the embedding and anchoring of the magnet (8) in the joint ball (2) takes place by means of an elastic auxiliary body (10).

10. Ball joint according to claim 9,
**characterised in that**
the elastic auxiliary body consists of a polymer.

11. Ball joint according to claim 9 or 10,
**characterised in that**
the magnet (8) has an essentially cylindrical shape, and the elastic auxiliary body (10) essentially has the shape of a cylindrical ring.

12. Ball joint according to one of claims 9 to 11,
**characterised in that**
the elastic auxiliary body (10) is constructed as an essentially annular spring (14) made of non-ferromagnetic material.

13. Ball joint according to claim 12,
**characterised in that**
the annular spring (14) is extrusion-coated, at least in certain regions, with plastic material (16).

## Revendications

1. Articulation à rotule (1) pourvue d'un capteur d'angle de pivotement (9) destiné à déterminer la position angulaire relative entre le boîtier d'articulation (4) et le pivot à rotule (3), comprenant un aimant (8) encastré dans un évidement de la rotule d'articulation (2) et un capteur de champ magnétique (9) disposé sur le boîtier d'articulation (4),
**caractérisée en ce que**
pour une série d'articulations à rotule, où une adaptation de l'articulation à rotule se limite à la rotule d'articulation et à l'agencement de l'aimant, la position et la taille de l'aimant (8) ainsi que la position et la taille de l'évidement ménagé dans la rotule d'articulation (2) sont sélectionnées de façon telle que, lorsqu'on atteint un angle de pivotement nominal αₘ de l'articulation à rotule correspondante (1), l'angle κ des lignes de champ magnétique (12) traversant le capteur de champ magnétique (9) coïncide à peu près avec une constante κₘ valable pour toute la série.

2. Articulation à rotule selon la revendication 1, **caractérisée en ce que** la constante κₘ correspond à l'angle de champ magnétique maximal pouvant être détecté par le capteur de champ magnétique (9).

3. Articulation à rotule selon la revendication 1 ou 2, **caractérisée en ce que** l'aimant (8) est un aimant tige dont l'axe magnétique coïncide avec l'axe du pivot à rotule (3).

4. Articulation à rotule selon l'une des revendications 1 à 3, **caractérisée en ce que** l'aimant (8) est disposé au niveau de la zone polaire de la rotule d'articulation (2) qui est éloignée du pivot à rotule.

5. Articulation à rotule selon l'une des revendications 1 à 4, **caractérisée en ce que** le capteur (9) est disposé au niveau du couvercle obturateur (7) du boîtier d'articulation (4).

6. Articulation à rotule selon l'une des revendications 1 à 5, **caractérisée en ce que** l'axe de symétrie magnétique du capteur (9) coïncide avec l'axe de symétrie du boîtier d'articulation (4) ou avec l'axe de symétrie du pivot à rotule (3).

7. Articulation à rotule selon l'une des revendications 1 à 6, **caractérisée en ce que** le capteur (9) est disposé, ou encastré dans un élément (7) en matière plastique.

8. Articulation à rotule selon la revendication 7, **caractérisée en ce que** l'élément (7) en matière plastique assure la fonction du couvercle obturateur du boîtier d'articulation (4).

9. Articulation à rotule selon l'une des revendications 1 à 8, **caractérisée en ce que** l'encastrement ou l'ancrage de l'aimant (8) dans la rotule d'articulation (2) se fait par l'intermédiaire d'un corps auxiliaire élastique (10).

10. Articulation à rotule selon la revendication 9, **caractérisée en ce que** le corps auxiliaire élastique (10) est réalisé en un polymère.

11. Articulation à rotule selon la revendication 9 ou 10, **caractérisée en ce que** l'aimant (8) présente une forme essentiellement cylindrique, et que le corps auxiliaire élastique (10) présente une forme essentiellement cylindrique annulaire.

12. Articulation à rotule selon l'une des revendications 9 à 11, **caractérisée en ce que** le corps auxiliaire élastique (10) est réalisé sous forme d'un ressort (14) essentiellement annulaire fait en une matière non ferromagnétique.

13. Articulation à rotule selon la revendication 12, **caractérisée en ce que** le ressort annulaire (14) est au moins par endroits enrobé par projection d'une matière plastique (16).
